Europäisches Patentamt

European Patent Office

Office européen des brevets

(19)

(11) Publication number: **0 068 710
B1**

(12) **EUROPEAN PATENT SPECIFICATION**

(45) Date of publication of patent specification: **03.09.86**

(21) Application number: **82303099.4**

(22) Date of filing: **15.06.82**

(51) Int. Cl.⁴: **B 65 D 51/16,** B 60 K 15/04

(54) Fuel tank filler neck cap.

(30) Priority: **24.06.81 US 276880**

(43) Date of publication of application:
**05.01.83 Bulletin 83/01**

(45) Publication of the grant of the patent:
**03.09.86 Bulletin 86/36**

(84) Designated Contracting States:
**AT DE FR GB IT SE**

(56) References cited:
**US-A-3 724 707
US-A-4 000 828
US-A-4 091 955**

(73) Proprietor: **STANT INC.
1620 Columbia Avenue
Connersville Indiana 47331 (US)**

(72) Inventor: **Harris, Robert S.
R.R. No. 3 Box 411A
Connersville Indiana 47331 (US)**

(74) Representative: **Blatchford, William Michael
et al
Withers & Rogers 4 Dyer's Buildings Holborn
London EC1N 2JT (GB)**

Courier Press, Leamington Spa, England.

## Description

The present invention relates to a fuel tank filler neck cap. More particularly, the invention is concerned with an improvement for controlling the flow of fuel vapors when the pressure in the tank reaches a predetermined superatmospheric level.

Pressure/vacuum valve assemblies have previously been incorporated into caps for filler necks of fuel tanks to admit air into the tank through a vent passageway when pressure in the tank decreases to a predetermined subatmospheric level and to vent fuel vapors out of the tank through the vent passageway when pressure in the tank increases to a predetermined superatmospheric pressure. For example, a cap is disclosed in US—A—4,091,955 assigned to the present applicants and comprises a housing providing a vent passageway for venting fuel vapor out of the tank when pressure in the tank increases to a predetermined superatmospheric pressure and admitting air to the tank when pressure in the tank decreases to a predetermined subatmospheric level, the housing including an axially outwardly facing surface and a radially inwardly facing surface, a vent opening provided in the axially outwardly facing surface and a pressure/vacuum valve assembly in the housing for controlling the venting of fuel vapor and admission of air, the valve assembly including a pressure valve member and a vacuum-relief valve member, the pressure valve member having an axially inner surface area exposed to the pressure in the tank and being urged by a first control spring against a valve seat provided by the axially outwardly facing housing surface to normally close the vent opening and the vacuum-relief valve member being urged by a second control spring in a direction to normally close a vacuum relief aperture in the pressure valve member.

In response to a predetermined superatmospheric pressure the pressure valve member is urged in opposition to the first control spring to open the vent passageway and, in response to a predetermined subatmospheric pressure, the vacuum-relief valve is urged in opposition to the second control spring to open the vacuum-relief aperture.

In a fuel tank filler neck cap, the pressure valve member must maintain a seal in its normally closed position until a predetermined superatmospheric pressure is produced in the fuel tank. Once such pressure has been achieved, it is then important that the vent passageway be rapidly opened, be maintained open, and provide a high flow of fuel vapor. Although the pressure/vacuum valve assembly disclosed in US—A—4,091,955, provides a seal in the normally closed position of the pressure valve member, once the predetermined superatmospheric pressure is achieved in the tank, a relatively large pressure increase above the superatmospheric pressure is required in order to maintain the pressure valve member in an open position and provide a high flow of fuel vapor.

One object of the present invention is to provide a fuel tank filler neck cap with a pressure valve assembly which responds quickly to a predetermined superatmospheric pressure in the tank to open a vent passageway, and which thereafter provides a comparatively high flow of fuel vapor without a pressure increase above the initial opening superatmospheric pressure.

It is another object of the present invention to provide a pressure valve assembly which provides a seal in the normally closed position of the pressure valve member until a predetermined superatmospheric pressure is achieved in the tank and which in response to the predetermined superatmospheric pressure quickly opens the valve passageway and quickly provides high flow of fuel vapor.

Still another object of the present invention is to provide a pressure valve assembly which employs a first surface area exposed to pressure in the tank to quickly open the valve passageway in response to superatmospheric pressure and a second surface area forming a restricted opening for the flow of fuel vapor, whereby a small increase in pressure in the restricted opening produces a large force against the first and second surface areas to rapidly increase the flow of fuel vapor.

Yet another object of the present invention is to provide a pressure valve assembly where subsequent to the rapid release of fuel vapor a relatively constant pressure is maintained to keep the vent passageway open until a safe level of pressure is reached in the tank.

Various other features and advantages of the present invention will become apparent in view of the following detailed description of one embodiment thereof, which description should be considered in conjunction with the accompanying drawings, in which:

Fig. 1 is an axially sectional side elevational view of a portion of a cap including the pressure/vacuum valve assembly of the present invention; and

Fig. 2 is an enlarged fragmentary sectional view of the pressure/vacuum valve assembly of Fig. 1, showing the valve in a pressure-release position.

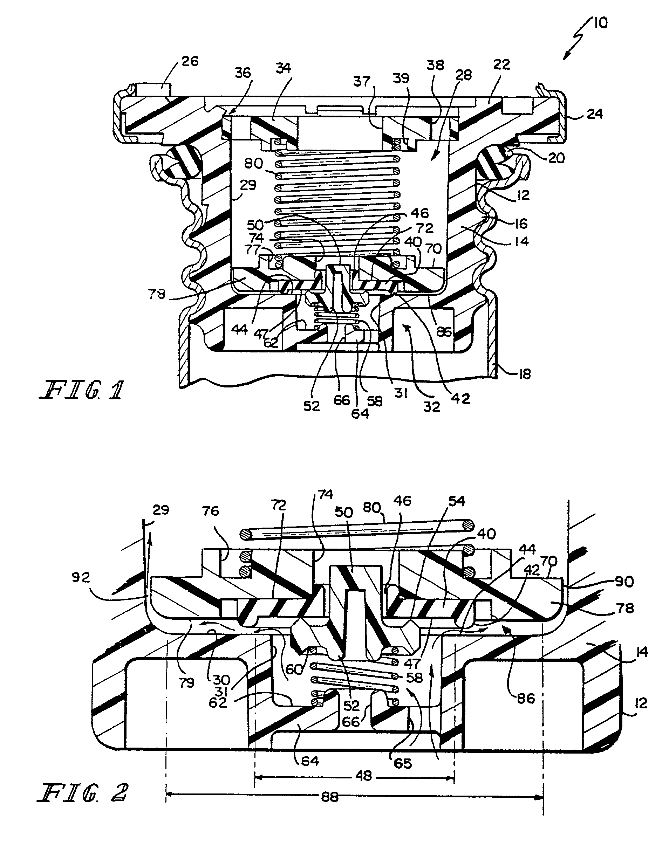

Referring now to Figs. 1 and 2, a cap 10 for a filler neck of a fuel tank includes a molded plastic closure member 12 having an axially inwardly extending shank portion 14 which is threaded as indicated at 16 to engage a threaded filler neck 18 of a fuel tank (not shown). Closure 12 includes a gasket 20 which sealably engages the conventional peripherally and radially outwardly extending lip provided by the filler neck 18.

Cap 10 further includes a molded plastic shell member 24 secured to the closure member for rotation with respect to the closure member about the axis of the cap. Closure 12 also includes a flange 22 at its axially outer end. Flange 22 extends radially outwardly of the axis of closure 12.

Although the configuration of the cap 10 is not important to the present invention, one embodiment of the cap 10 may include an annular race 26 which is disposed for rotation within the shell 24 and which cooperates with camming surfaces to provide a torque-overriding connection between the shell 24 and closure 12 in the direction which advances the closure 12 into the fuel tank filler neck 18 and which cooperates to provide a direct connection between the shell 24 and closure 12 in the direction which removes the closure 12 from the filler neck 18.

Closure 12 further includes a pressure/vacuum valve housing 28 into which is assembled a pressure/vacuum valve assembly 32 constructed according to the present invention. Assembly 32 controls venting of pressure and relief of vacuum which develop within the fuel tank and controls the flow of fuel vapors through the housing to provide rapid venting of fuel vapors in response to a predetermined superatmospheric pressure in the tank.

Housing 28 is generally cylindrical and includes a radially inwardly facing surface 29 and an axially outwardly facing radially inwardly extending surface 30. A central circular vent opening 31 is provided in the axially outwardly facing surface 30 for admitting air and venting fuel vapor.

The valve assembly 32 is retained within the housing 28 by a circular retainer 34 which is press-fitted into the axially outer end 36 of housing 28. The retainer 34 includes a central circular aperture 37 having a preferred diameter of approximately .496 inch (1.26 cm). The retainer 34 further includes a series of radially spaced-apart circular apertures 38, each having a preferred diameter of approximately .123 inch (.312 cm). Pressure release and vacuum relief are accomplished through the vent passageway formed by housing 28 and through the apertures 37 and 38 provided in the circular retainer 34. The circular retainer 34 further includes an annular axially inwardly opening groove 39 which engages a control spring in a manner to be described later to retain the vent assembly 32 within the housing 28. Continuing to refer to Figs. 1 and 2, the pressure/vacuum valve assembly 32 controls the venting of fuel vapors at a predetermined superatmospheric pressure out of the fuel tank (not shown) through the vent passageway formed by housing 28 and between the closure member 12 and the shell 24 of the cap 10 to the atmosphere. The assembly 32 also controls the entry of air through the vent passageway formed by the housing 28 into the fuel tank when the pressure in the fuel tank decreases to a predetermined subatmospheric level.

The pressure/vacuum valve assembly 32 includes a circular pressure-release valve member 40 including an annular, axially inwardly facing valve edge 42 which seats against a valve seat 44 provided by the axially outwardly facing surface 30 of the housing 28 to close the venting opening 31. The pressure-release valve member 40 includes a central circular aperture 46. In a preferred embodiment, the pressure-release valve member has a circular axially inner surface 47 exposed to the fuel vapor pressure within the fuel tank (not shown). In the preferred embodiment, the axially inner surface 47 has a diameter of .65 inch (1.65 cm). The effective surface area 48 exposed to the pressure in the tank is therefore .332 sq. inch (2.14 sq. cm).

An axially outwardly extending guiding stem portion 50 of a vacuum-relief valve member 52 is received in the aperture 46, holding valve member 52 in alignment in the valve assembly 32. The valve member 52 includes an annular, axially outwardly facing valve edge 54 which cooperates with a seat region on the axially inner surface 47 of the pressure-release valve member 40. Valve edge 54 is held against the axially inner surface 47 by a vacuum-relief control spring 58 disposed between an axially inwardly facing surface 60 of the valve member 52 and the bottom 62 of a spring retainer cup 64 provided at the axially inner end of the housing 28. The vacuum-relief control spring 58 has a predetermined spring constant which allows the vacuum-relief valve member 52 to be urged in opposition to the spring 58 in response to a predetermined subatmospheric pressure within the fuel tank (not shown) to open the aperture 46 and allow air to pass through the housing 28 into the fuel tank. A venting aperture 66 is provided at the bottom 62 of the spring retainer cup 64 for venting air and pressure into and out of the fuel tank. In the preferred embodiment, the venting aperture 66 has a diameter of approximately .100 inch (.254 cm). In addition, retainer cup 64 contains four radially disposed slots 65 to provide additional area for flow of vapor and/or air.

The pressure/vacuum valve assembly 32 further includes a circular pressure-release control plate 70 for controlling the flow of fuel vapor through the housing when the pressure-release valve member 40 is unseated to its open position, shown in Fig. 2, in response to a predetermined superatmospheric pressure in the tank. The circular pressure-release control plate 70 is seated on the axially outer surface 72 of the pressure-release valve member 40. The control plate 70 includes a central circular aperture 74 and an annular axially outwardly opening groove 76. An annular radially outwardly extending flange 78 has an axially inner surface 79 which is exposed to the pressure of the fuel vapor when the pressure-release valve member 40 is in its open position. In the preferred embodiment, control plate 70 has a diameter of approximately 1.22 inches (3.10 cm) and the aperture 74 has a diameter of .250 inch (.635 cm). The valve edge 42 of the pressure-release valve member 40 is yieldably urged against the seat 44 provided on the axially outwardly facing surface 30 of the housing 28, and the pressure-release control member 70 is urged against the axially outer surface 72 of the pressure-release valve member 40 by a pressure-release control spring 80. Spring 80 is held in place between the pressure-release control plate 70 and the retainer 34 which is press-fitted into the axially outer end 36 of housing 30. Control spring 80 is positioned in the grooves 39, 77 of the retainer 34 and the pressure-release control member 70, respectively, and has a spring constant for yieldably urging the pressure-release valve member 40 against the seat 44 normally to close the vent opening 31 in the housing 30. In its closed position, the pressure-release valve member 40 provides a seal between the valve edge 42 and the valve seat 44 until the pressure in the fuel tank reaches a predetermined superatmospheric pressure. In response to the predetermined superatmospheric pressure against the axially inner surface 44 of the pressure-release valve member 40, the valve 40 is urged axially outwardly to open the vent passageway. Axially outward movement of the venting valve 40 occurs relatively quickly in order to rapidly open the vent passageway.

The axially outward movement of the pressure-release valve member 40 results in corresponding movement of the pressure-release control member 70. The axially inner surface 79 of the control member 70 cooperates with the axially outwardly facing surface 30 of housing 28 to provide an annular restricted opening 86 for the flow of fuel vapors from the tank. The clearance between the axially inner surface 79 of the control plate 70 and the surface 30 of the housing 28 is very small. It should be noted that before the pressure-release valve member 40 is moved axially outward in response to the predetermined superatmospheric pressure, the pressure level in the restricted opening 86 will be less than the superatmospheric pressure. Therefore, once the fuel vapors begin to flow through the restricted opening, the pressure level in the opening will increase until it reaches the predetermined superatmospheric level. As shown in Fig. 2, the combined surface area 88 (1.17 sq. in.; 7.54 sq. cm) of the inner surfaces 47, 79 is substantially larger than the surface area 48 of the pressure-release valve member 40. When the fuel vapor flows through the opening 86, the combined surface area 88 of the surfaces 47, 79 is exposed to the predetermined superatmospheric pressure. Due to the restriction of opening 86, a relatively small increase in pressure level in the annular opening 86 produces a greater force against the spring 80 to increase the size of opening 86 and the flow rate of the fuel vapors through the opening 86. The combination of the relatively small increase in pressure level in the opening 86 on inner surface 79 and the predetermined superatmospheric pressure on inner surface 47 creates a force on the combined surfaces 79 and 47 which is substantially greater than the initial force produced by the predetermined superatmospheric pressure on surface 47 to rapidly increase the size of opening 86.

The radially outwardly extending flange 78 of the pressure-release control member 70 also includes a radially outer surface 90 which, in cooperation with the radially inwardly facing surface 29 of the housing 28, forms a radially outer restricted opening 92. From the opening 86, fuel vapor flows through opening 92 and into the housing 28 to be released into the atmosphere. Subsequent to the initial rapid release of fuel vapor, the pressure level in opening 86 stabilizes. The radially outer opening 92 serves to restrict the flow of fuel vapor, after the initial rapid release, to maintain a constant pressure against the surfaces 47, 79. This constant pressure is generally at or slightly below the predetermined superatmospheric pressure to keep the pressure-release valve 40 from being urged back against the seat 44 immediately after the rapid release and also to maintain the valve 40 in an open position until the pressure in the tank drops to a safe level. It will be understood that the constant pressure level must exert a force against the surfaces 47 and 79 which generally equals the force being exerted by the compressed control spring 80 in order to keep the vent passageway open after the initial rapid release of the fuel vapor.

It can be appreciated from the above description that the pressure/vacuum valve assembly 32 of the present invention seals the vent passageway formed by the housing 28 until the pressure within the fuel tank reaches a predetermined superatmospheric pressure. When the predetermined superatmospheric pressure is applied to the effective surface area 48 of the axially inner surface 47 of the release valve member 40, the valve member 40 is quickly moved axially outward from its seat 44 to allow immediate release of the pressure. In response to axially outward movement of the release valve member 40, fuel vapor flows into the annular restricted opening 86. The axially inner surface 79 of the control member 70 is therefore also exposed to the superatmospheric pressure in the fuel tank and the pressure level in the opening 86 begins to increase. In response to a relatively small increase in pressure in the opening 86, the combined pressures against surfaces 79 and 47 produces a greater force against the control spring 80 to further move the pressure-release valve 40 and pressure-release control member 70 axially outward, thereby to rapidly increase the flow rate of the fuel vapor through the vent passageway in the housing 28. Subsequent to the initial rapid release of fuel vapor, the radially outer opening 92 restricts the fuel flow to maintain a constant pressure against surfaces 47, 79 at or slightly below the superatmospheric pressure to keep the vent passageway open until the pressure in the tank drops to a safe level.

**Claims**

1. A cap for a filler neck of a fuel tank comprising a housing (28) providing a vent passageway for venting fuel vapour out of the tank when pressure in the tank increases to a predetermined superatmospheric pressure, the housing (28) including an axially outwardly facing surface (30) and a radially inwardly facing surface (29), a vent opening (31) provided in the axially outwardly facing surface (30) and a pressure valve assembly (32) in the housing (28) for controlling the venting of fuel vapour, the valve assembly (32) including a first valve member (40) having a first axially inner surface area (47) exposed to the pressure in the tank and yieldable means (80) urging the first valve member (40) against a valve seat (44) provided by the axially outwardly facing housing surface (30) normally to close the vent opening (31), characterised by a second valve member (70) disposed between the first valve member (40) and the yieldable means (80) for controlling flow of fuel vapour from the tank through the vent passageway, the second valve member (70) including a radially outer surface (90) and a second axially inner surface area (79) encircling the first valve member (40), the first and second axially inner surface areas (47, 79) providing a combined axially inner surface area that is substantially greater than the first axially inner surface area (47), the second axially inner surface area (79) forming a first annular restricted opening (86) with the axially outwardly facing housing surface (30) for flow of fuel vapour in the vent passageway, the radially outer surface (90) of the second valve member (70) forming a second annular restricted opening (92) with the radially inwardly facing housing surface (29) for the flow of fuel vapour in the vent passageway, the predetermined superatmospheric pressure applying a force to the first axially inner surface area (47) to urge the first valve member (40) in opposition to the yieldable means (80) and open the vent opening (31), exposure of the combined axially inner surface area (47, 79) to a relatively small pressure increase in the first annular restricted opening (86) producing a relatively larger force in opposition to the yieldable means rapidly to increase the flow of fuel vapour, the second restricted opening (92) limiting the flow of fuel vapour to maintain a generally constant pressure against the combined axially inner surface area (47, 79) to keep the vent opening (31) open until a safe pressure level below the predetermined superatmospheric level is reached in the tank.

2. A cap according to claim 1, wherein the second valve member (70) includes a plate carried on an axially outer surface (72) of the first valve member (40), the plate being urged against the axially outer surface (72) by the yieldable means (80) and being urged simultaneously with the first valve member (40) in opposition to the yieldable means (80) in response to the predetermined superatmospheric pressure.

3. A cap according to claim 2, wherein the plate includes a radially outwardly extending annular flange (78) encircling the first valve member (40), the flange (78) providing the axially inner surface area (79) of the plate.

**Revendications**

1. Fermeture pour une tubulure de remplissage d'un réservoir de carburant comprenant un logement (28) fournissant un passage d'évent pour l'échappement de vapeur de carburant en dehors du réservoir quand la pression dans le réservoir augmente jusqu'à une surpression prédéterminée au-dessus de la pression atmosphérique, le logement (28) comprenant une surface (30) faisant face axialement vers l'extérieur et une surface (29) faisant face radialement vers l'intérieur, une ouverture d'évent (31) ménagée dans la surface (30) faisant face axialement vers l'extérieur et un ensemble de soupape de pression (32) dans le logement (28) pour commander l'échappement de la vapeur de carburant, l'ensemble de soupape (32) comprenant un premier élément de soupape (40) ayant une première surface (47) axialement vers l'intérieur exposée à la pression dans le réservoir et un moyen pouvant fléchir (80) pressant le premier élément de soupape (40) contre un siège de soupape (44) constitué par la surface de logement faisant face axialement vers l'extérieur (30) pour fermer normalement l'ouverture d'évent (31), caractérisée par un second élément de soupape (70) disposé entre le premier élément de soupape (40) et le moyen pouvant fléchir (80) pour commander l'échappement de vapeur de carburant à partir du réservoir à travers le passage d'évent, le second élément de soupape (70) comprenant une surface radialement extérieure (90) et une seconde surface axialement intérieure (79) encerclant le premier élément de soupape (40), la première surface axialement intérieure et la seconde (47, 79) établissant une surface axialement intérieure combinée qui est notablement plus grande que la première surface axialement intérieure (47), la seconde surface axialement intérieure (79) formant une première ouverture annulaire restreinte (86) avec la surface de logement faisant face axialement vers l'extérieur (30) pour l'échappement de vapeur de carburant dans le passage d'évent, la surface radialement extérieure (90) du second élément de soupape (70) formant une seconde ouverture annulaire restreinte (92) avec la surface de logement faisant face radialement vers l'intérieur (29) pour l'écoulement de vapeur de carburant dans le passage d'évent, la pression prédéterminée supérieure à la pression atmosphérique appliquant une force à la première surface axialement intérieure (47) pour pousser le premier élément de soupape (40) contre l'action du moyen pouvant fléchir (80) et pour ouvrir l'ouverture d'évent (31), l'exposition des surfaces combinées axialement intérieures (47, 79) à une augmentation de pression relativement faible dans la première ouverture annulaire restreinte (86) produisant une force relativement plus grande contre l'action du moyen pouvant fléchir pour augmenter rapidement l'écoulement de vapeur de carburant, la seconde ouverture restreinte (92) limitant l'écoulement de vapeur de carburant pour maintenir une pression généralement constante contre les surfaces combinées axialement intérieures (47, 79) afin de maintenir ouverte l'ouverture d'évent (31) jusqu'à ce qu'un niveau de pression de sécurité au-dessous du niveau prédéterminé supérieur à la pression atmosphérique soit atteint dans le réservoir.

2. Fermeture selon la revendication 1, dans laquelle le second élément de soupape (70) comprend une plaque portée sur une surface axialement extérieure (72) du premier élément de soupape (40), la plaque étant poussée contre la surface axialement extérieure (72) par le moyen pouvant fléchir (80) et étant poussée simultanément avec le premier élément de soupape (40) contre l'action du moyen pouvant fléchir (80) en réponse à la pression prédéterminée supérieure à la pression atmosphérique.

3. Fermeture selon la revendication 2, dans laquelle la plaque comprend une collerette annulaire s'étendant radialement vers l'extérieur (78) encerclant le premier élément de soupape (40), la collerette (78) établissant la surface axialement intérieure (79) de la plaque.

**Patentansprüche**

1. Verschluß für einen Einfüllstutzen eines Kraftstofftanks, bestehend aus einem Gehäuse (28) mit einem Entlüftungskanal zum Entlüften von Kraftstoffdampf aus dem Tank, wenn der Druck in dem Tank einen vorbestimmten überatmosphärischen Druck übersteigt, wobei das Gehäuse (28) eine axial nach außen weisende Oberfläche (30) und eine radial nach innen weisende Oberfläche (29), eine Entlüftungsöffnung (31), die in der axial nach außen weisenden Oberfläche (30) vorgesehen ist, und eine Druckventilanordnung (32) in dem Gehäuse (28) zur Regelung des Entlüftens von Kraftstoffdampf aufweist, und wobei zu der Ventilanordnung (32) ein erstes Ventilelement (40), das einen ersten axialen inneren Oberflächenbereich (47) besitzt, der dem Druck in dem Tank ausgesetzt ist, und eine nachgebende Einrichtung (80) gehören, welche das erste Ventilelement (40) gegen einen Ventilsitz (44) drückt, der durch die axial nach außen weisende Gehäuseoberfläche (30) vorgesehen ist, um normalerweise die Entlüftungsöffnung (31) zu schließen, gekennzeichnet durch ein zweites Ventilelement (70), das zwischen dem ersten Ventilelement (40) und der nachgebenden Einrichtung (80) zur Regelung der Strömung des Kraftstoffdampfes aus dem Tank durch den Entlüftungskanal angeordnet ist, wobei zu dem zweiten Ventilelement (70) eine radiale äußere Oberfläche (90) und ein zweiter axialer innerer Oberflächenbereich (79) gehören, der das erste Ventilelement (40) umgibt, wobei der erste und der zweite axiale Innenoberflächenbereich (47, 79) einen kombinierten axialen inneren Oberflächenbereich vorsehen, der im wesentlichen größer als der erste axiale innere Oberflächenbereich (47) ist, wobei der zweite axiale innere Oberflächenbereich (79) eine erste begrenzte ringförmige Öffnung (86) mit der axial nach außen weisenden Gehäuseoberfläche (30) für die Strömung eines Kraftstoffdampfes in dem Entlüftungskanal bildet, wobei die radiale Außenoberfläche (90) des zweiten Ventilelements (70) eine zweite begrenzte ringförmige Öffnung (92) mit der radial nach innen weisenden Gehäuseoberfläche (29) für die Strömung des Kraftstoffdampfes in dem Entlüftungskanal bildet, wobei der vorbestimmte überatmosphärische Druck den ersten axialen inneren Oberflächenbereich (47) mit einer Kraft beaufschlagt, um das erste Ventilelement (40) entgegen der nachgebenden Einrichtung (80) zu drücken und die Entlüftungsöffnung (31) zu öffnen, wobei das einem relativ kleinen Druckanstieg in der ersten begrenzten ringförmigen Öffnung (86) erfolgende Aussetzen des kombinierten axialen inneren Oberflächenbereichs (47, 79) eine relativ größere Kraft entgegen der nachgebenden Einrichtung erzeugt, um schnell die Strömung des Kraftstoffdampfes zu erhöhen, wobei die zweite begrenzte Öffnung (92) die Strömung des Kraftstoffdampfes begrenzt, um einen etwa konstanten Druck gegenüber dem kombinierten axialen inneren Oberflächenbereich (47, 79) für das Offenhalten der Entlüftungsöffnung (31) aufrechtzuerhalten, bis in dem Tank ein sicherer Druckpegel unterhalb des vorbestimmten überatmosphärischen Pegels erreicht ist.

2. Verschluß nach Anspruch 1, dadurch gekennzeichnet, daß zu dem zweiten Ventilelement (70) eine Platte gehört, die auf einer axialen äußeren Oberfläche (72) des ersten Ventilelements (40) gehalten ist, wobei die Platte gegen die axiale äußere Oberfläche (72) mittels der nachgebenden Einrichtung (80) und gleichzeitig mit dem ersten Ventilelement (40) entgegen der nachgebenden Einrichtung (80) in Abhängigkeit von dem vorbestimmten überatmosphärischen Druck gedrückt wird.

3. Verschluß nach Anspruch 2, dadurch gekennzeichnet, daß zu der Platte ein sich radial nach außen erstreckender ringförmiger Flansch (78) gehört, der das erste Ventilelement (40) umgibt, wobei der Flansch (78) den axialen inneren Oberflächenbereich (79) der Platte bildet.

FIG. 1

FIG. 2

1